Europäisches Patentamt

European Patent Office

Office européen des brevets

(11) Veröffentlichungsnummer: **0 095 107**
A2

# EUROPÄISCHE PATENTANMELDUNG

(21) Anmeldenummer: 83104726.1

(22) Anmeldetag: 13.05.83

(51) Int. Cl.³: **B 29 B 1/06**

(30) Priorität: 22.05.82 DE 8214997 U

(43) Veröffentlichungstag der Anmeldung:
30.11.83 Patentblatt 83/48

(84) Benannte Vertragsstaaten:
DE FR GB IT

(71) Anmelder: Elastogran Maschinenbau GmbH

D-8021 Strasslach(DE)

(72) Erfinder: Taubenmann, Peter
Strindbergstrasse 1
D-8000 Muenchen 60(DE)

(72) Erfinder: Fleckenstein, Michael
Athener Strasse 1
D-8000 Muenchen 90(DE)

(74) Vertreter: Springer, Hans Jörg et al,
Carl-Bosch-Strasse 38
D-6700 Ludwigshafen(DE)

(54) Steuerorgan für eine Mischvorrichtung für Kunststoffkomponenten.

(57) Steuerorgan für eine Vorrichtung zum Mischen von Kunststoffkomponenten, bestehend aus einem Zylindergehäuse, einem darin verschiebbaren Steuerkolben, der in einer unter Druckspannung stellbaren Zylinderbüchse aus Kunststoff geführt ist, und einer das Zylindergehäuse gegen Atmosphäre abschließenden Dichtung.

EP 0 095 107 A2

Steuerorgan für eine Mischvorrichtung für Kunststoffkomponenten

Die Erfindung bezieht sich auf ein Steuerorgan für eine Vorrichtung zum Mischen von Kunststoffkomponenten gemäß Oberbegriff des Schutzanspruchs 1.

Derartige, im allgemeinen als Mischkopf bezeichnete Vorrichtungen bestehen gewöhnlich aus einer Mischkammer, die Eintrittsöffnungen für die einzelnen Komponenten und eine Austrittsöffnung für das Komponentengemisch besitzt, einem Steuerorgan, ausgebildet als ein zwischen einer die Eintrittsöffnungen offenlassenden Stellung und einer die Eintrittsöffnungen absperrenden Stellung hin- und herbewegbarer Steuerkolben, sowie aus einem Ausstoßkolben.

Der Steuerkolben und das Zylindergehäuse dafür sind gewöhnlich aus Stahl hergestellt. Unter den ungünstigen Betriebsbedingungen in einem Mischkopf treten trotz aufwendiger Härtebehandlungen dieser Teile immer wieder schneller Verschleiß und Betriebsstörungen durch sogenanntes Fressen auf, wobei häufig auch die Dichtungen zerstört werden. Man hat schon versucht, diesem Problem durch das Einsetzen einer Zylinderbüchse aus Kunststoff zu begegnen, und auch schon wesentliche Verbesserungen erzielt. Es konnte dabei aber nicht verhindert werden, daß sich am Steuerkolben Mischprodukte anlagern und aufbauen, welche dann unter der Kolbenbewegung durch die Dichtungen gezogen werden und dort weiterhin Störungen verursachen.

Demgemäß bestand die Aufgabe, diese Nachteile durch weitere konstruktive Maßnahmen zu beseitigen.

Sp/P

Die Lösung der Aufgabe ist in den Schutzansprüchen angegeben.

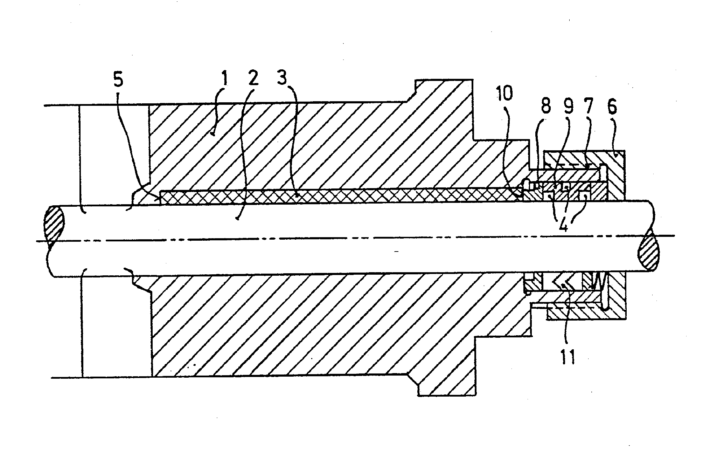

Nachfolgend ist die Erfindung anhand eines in der Zeichnung dargestellten Ausführungsbeispiels im einzelnen beschrieben.

In der Zeichnung ist das erfindungsgemäße Steuerorgan für eine Vorrichtung zum Mischen von Kunststoffkomponenten im Längsschnitt schematisch wiedergegeben. Es besteht aus einem Zylindergehäuse 1, einem darin verschiebbaren Steuerkolben 2 und einer Zylinderbüchse 3 aus Kunststoff, zum Beispiel aus Polyamid, in der der Steuerkolben geführt ist. Gegen die Atmosphäre oder einen ölhydraulischen Druckraum ist das Zylindergehäuse durch Dichtungsringe 4 abgeschlossen.

Um ein Ansetzen von Mischprodukten am Steuerkolben zu verhindern, muß die Zylinderbüchse 3 möglichst dicht am Steuerkolben 2 anliegen. Gemäß vorliegender Erfindung wird dies dadurch erreicht, daß die Zylinderbüchse gegen einen Anschlag 5 unter Druckspannung gestellt wird, wodurch eine Querschnittsänderung und damit eine Verringerung deren Innendurchmessers eintritt. Die Zylinderbüchse liegt somit spielfrei am Steuerkolben an.

Die konstruktiven Maßnahmen hierzu sehen als Spannmittel zur Erzeugung der Druckspannung eine Überwurfmutter 6 vor, die koaxial zur Zylinderbüchse 3 auf ein Gewinde 7 des Zylindergehäuses 1 schraubbar und dabei über einen oder mehrere Druckringe 8, 9 gegen die Stirnfläche 10 der Zylinderbüchse 3 stellbar ist. Einer der Druckringe ist als Dichtungskäfig 9 zur Aufnahme der Dichtungsringe 4 ausgebildet, die die früheren V-förmigen Dichtungsmanschetten 11 (in der unteren Längsschnitthälfte gezeigt) als Packung einer Stopfbüchse ersetzen. Die Druckspannung kann dabei mit Hilfe der Gewindesteigung in Form eines Drehmomentes oder in Form von Winkelgraden definiert werden.

Die am Steuerkolben dicht anliegende Zylinderbühcse wirkt als zusätzliche Dichtung, wobei Produktanlagerungen im Ansatz abgestreift werden. Die das Zylindergehäuse abschließende Dichtung 4, 9 wird dadurch ebenfalls geschont.

Es versteht sich, daß zur Sicherstellung einer langen Funktionstüchtigkeit der Zylinderbüchse als Werkstoff ein unter der Druckspannung elastisch bleibender, nicht fließender und darüber hinaus zu den Kunststoffkomponenten chemisch sich neutral verhaltender Kunststoff zu wählen ist.

Schutzansprüche

1. Steuerorgan für eine Vorrichtung zum Mischen von Kunststoffkomponenten, bestehend aus einem Zylindergehäuse, einem darin verschiebbaren Steuerkolben, der in einer Zylinderbüchse aus Kunststoff geführt ist, und einer das Zylindergehäuse abschließenden Dichtung, dadurch gekennzeichnet, daß koaxial zur Zylinderbüchse (3) gegen eine deren Stirnflächen führbare Spannmittel angeordnet sind, durch die die Zylinderbüchse in ihrem Querschnitt veränderbar ist.

2. Steuerorgan nach Anspruch 1, dadurch gekennzeichnet, daß das Spannmittel aus einer koaxial zur Zylinderbüchse (3) auf das Zylindergehäuse (1) schraubbaren und dabei über einen oder mehrere Druckringe (8, 9) gegen die Stirnfläche (10) der Zylinderbüchse (3) stellbaren Überwurfmutter (6) besteht.

Zeichn.